# EUROPÄISCHE PATENTANMELDUNG

(11) **EP 2 963 601 A1**
(43) Veröffentlichungstag der Anmeldung: **06.01.2016**
(21) Anmeldenummer: 14175470.5
(22) Anmeldetag: 02.07.2014
(51) Int. Cl.: G06Q 10/08

(54) **Vorrichtung zur Desinfektion von Lagereinheiten und entsprechendes System und Verfahren**

(71) Anmelder: Menno Chemie-Vertrieb GmbH, 22850 Norderstedt (DE)
(72) Erfinder: Nevermann, Jan, 22397 Hamburg (DE); Gaugele, Hermann, 82393 Iffeldorf (DE)
(74) Vertreter: Becker, Eberhard

(57) **Zusammenfassung**

Die vorliegende Erfindung stellt eine Vorrichtung zur Desinfektion von Lagereinheiten, wobei die Lagereinheiten bevorzugt zur Aufnahme von pflanzlichen Waren bestimmt sind. Die Vorrichtung umfasst dabei eine Desinfektionseinheit, die angepasst ist, um eine Lagereinheit zu desinfizieren. Außerdem umfasst die Vorrichtung eine mit der Desinfektionseinheit verbundene Verarbeitungseinheit, die angepasst ist, um den Desinfektionsvorgang der Lagereinheit zu überwachen und zu steuern. Weiterhin umfasst die Vorrichtung ein Lesegerät, das angepasst ist, um die Lagereinheit des Warenlagers anhand einer individuellen Markierung zu identifizieren. Weiterhin werden durch die vorliegende Erfindung ein Warenlagersystem, ein Desinfektions-Steuersystem und ein entsprechendes Verfahren bereitgestellt.

## Beschreibung

Die vorliegende Erfindung betrifft eine Vorrichtung zur Desinfektion von Lagereinheiten und ein entsprechendes System und Verfahren dazu. Insbesondere betrifft die vorliegende Erfindung eine Hygienedokumentationsvorrichtung und ein Hygienedokumentationssystem für Transport- und Lagerlogistikanwendungen aller Art und ein entsprechendes Verfahren, insbesondere für Transport- und Lagerlogistikanwendungen für Lebensmittel pflanzlichen Ursprungs.

### Technischer Hintergrund

Im Stand der Technik existieren Transport- und Lagerlogistikanwendungen mit unterschiedlichen Charakteristiken (z.B. "Warehouse Management Systems" WMS). Üblicherweise wird in solchen Systemen der Eingang bzw. die Erzeugung eines gewissen Produkts erfasst und verknüpft mit unterschiedlichen Größen (Eingangsdatum, Uhrzeit, Art und Zustand des Produkts, Lagerort, geplante weitere Versendung/Bearbeitung des Produkts etc.) gespeichert. Beim Weitertransport des Produkts wir der Ausgang des Produkts vermerkt und wiederum mit unterschiedlichen Kenngrößen gespeichert. Dadurch wird die Dokumentationskette für ein Produkt auch während dessen Lagerung nicht unterbrochen.

In letzter Zeit kam es wiederholt zu Problemen mit verunreinigten oder von Krankheitserregern befallenen Produkten. Dies kann zum einen Lagerbestände des Produkts und dessen Produktion gefährden (z.B. Ralstonia solanacearum, Erreger der "Schleimkrankheit") oder aber gesundheitliche Risiken für den Endnutzer bergen (z.B. "EHEC"). Insbesondere bei Nahrungsmitteln für Menschen sind in letzter Zeit vermehrt Regulierungen in Kraft getreten, die die Verbreitung von verunreinigten oder befallenen Lebensmitteln eindämmen sollen.

So heißt es etwa in Richtlinie 98/57/EG DES RATES vom 20. Juli 1998: "[...]Einer der Schadorganismen für Kartoffeln und Tomaten ist Ralstonia solanacearum (Smith) Yabuuchi et al., der die Schleimkrankheit (Bakterielle Braunfäule) der Kartoffel und die Bakterielle Welke der Kartoffel und der Tomate hervorruft. In einigen Teilen der Gemeinschaft ist die Krankheit bereits aufgetreten, und begrenzte Infektionsquellen gibt es noch immer.

Der Kartoffel- und der Tomatenanbau sind in der gesamten Gemeinschaft stark gefährdet, wenn bei diesen Kulturen keine wirksamen Maßnahmen getroffen werden, um den Ausgangspunkt und die Verbreitung dieser Krankheit zu ermitteln, ihr Auftreten und ihre Verschleppung zu verhindern und nach Feststellung ihres Auftretens ihre Ausbreitung zu verhindern und sie mit dem Ziel der Tilgung zu bekämpfen."

Ziel der vorliegenden Erfindung ist es somit, eine Vorrichtung und ein Hygienedokumentationssystem für Transport- und Lagerlogistikanwendungen und ein entsprechendes Verfahren bereitzustellen, die dazu in der Lage sind die Verbreitung von Schädlingen und Krankheitserregern wirksam und kostengünstig zu unterbinden.

### Kurze Beschreibung der Erfindung

Im Folgenden sind beispielhaft Ausführungsformen der Erfindung offenbart. Die vorliegende Erfindung betrifft eine Vorrichtung zur Desinfektion von Lagereinheiten, wobei die Lagereinheiten bevorzugt zur Aufnahme von pflanzlichen Waren bestimmt sind. Die Vorrichtung umfasst dabei eine Desinfektionseinheit, die angepasst ist, um eine Lagereinheit zu desinfizieren. Außerdem umfasst die Vorrichtung eine mit der Desinfektionseinheit verbundene Verarbeitungseinheit, die angepasst ist, um den Desinfektionsvorgang der Lagereinheit zu überwachen und zu steuern. Weiterhin umfasst die Vorrichtung ein Lesegerät, das angepasst ist, um die Lagereinheit des Warenlagers anhand einer individuellen Markierung zu identifizieren.

In einer bevorzugten Ausführungsform der vorliegenden Erfindung umfasst die Lagerdesinfektionsvorrichtung weiterhin eine Markierungsvorrichtung, die angepasst ist, um die Lagereinheit als desinfiziert zu markieren.

In einer bevorzugten Ausführungsform der vorliegenden Erfindung umfasst die Markierung der Lagereinheit einen Strichcode, einen Zahlencode, einen QR-Code, einen Nahfeldkommunikationschip/NFC-Chip, einen Radiofrequenzidentifikationschip/RFID-Chip, andere passive Transponder und/oder das Schreiben bzw. Verändern von Daten auf einem in die Lagereinheit integriertem Speichermedium bzw. das anbringen eines solchen Speichermediums.

In einer bevorzugten Ausführungsform der vorliegenden Erfindung ist das Lesegerät ein optisches Lesegerät.

In einer bevorzugten Ausführungsform der vorliegenden Erfindung umfasst die Markierungsvorrichtung eine Etikettiervorrichtung, eine Nahfeldkommunikationsvorrichtung, einen aktiven Transponder und/oder eine Stempelvorrichtung.

In einer bevorzugten Ausführungsform der vorliegenden Erfindung ist die Desinfektionseinheit angepasst, um gemäß einer Identifikation einer Lagereinheit einen Desinfektionsschaum auf die Lagereinheiten zu verteilen.

In einer bevorzugten Ausführungsform der vorliegenden Erfindung ist die Desinfektionseinheit angepasst, um gemäß einer Identifikation einer Lagereinheit ein erstes Desinfektionsmittel und/oder ein zweites Desinfektionsmittel auf die Lagereinheiten zu verteilen.

In einer bevorzugten Ausführungsform der vorliegenden Erfindung ist die Verarbeitungseinheit angepasst, um über geeignete Sensoren wenigstens eine der Desinfektionsgrößen Druck des Desinfektionsmittels, Temperatur des Desinfektionsmittels, Einwirkzeit des Desinfektionsmittels, Desinfektionsmittelkonzentration in einer Desinfektionslösung und Volumenstrom pro Zeit des Desinfektionsmittels zu überwachen und/oder zu steuern.

In einer bevorzugten Ausführungsform der vorliegenden Erfindung ist die Verarbeitungseinheit angepasst, um die überwachten und/oder gesteuerten Werte zu speichern und an eine zentrale Vorrichtung zu übermitteln.

In einer bevorzugten Ausführungsform der vorliegenden Erfindung wird wenigstens eine der Desinfektionsgrößen zusammen mit Ort und Zeit sowie bevorzugte Art der Desinfektion auf der Lagereinheit vermerkt. Dies kann durch direktes aufbringen einer Beschriftung (Aufkleber, Aufdruck oder dergleichen) oder in Form eines Codes (z.B. zusammen mit der Markierung oder integriert in die Markierung, siehe oben) erfolgen.

In einer bevorzugten Ausführungsform der vorliegenden Erfindung umfasst die Verarbeitungseinheit eine Speicherkartenaufnahme, einen Universalschnittstellen-BUS-Anschluss/USB-Anschluss, eine Drahtloskommunikationsvorrichtung oder eine serielle Computerschnittstelle.

In einer bevorzugten Ausführungsform der vorliegenden Erfindung umfasst die Lagerdesinfektionsvorrichtung weiterhin eine Anzeigevorrichtung, die angepasst ist, um für den Desinfektionsvorgang relevante Größen anzuzeigen und/oder grafisch in einem Diagramm darzustellen.

In einer bevorzugten Ausführungsform der vorliegenden Erfindung umfasst die Verarbeitungseinheit weiterhin eine Steuereinheit, die angepasst ist, um die Lagerdesinfektionsvorrichtung durch eine angebundene Steuerungszentrale oder eine geeignetes Computerprogramm zu steuern.

In einem weiteren Aspekt der vorliegenden Erfindung wird ein Warenlagersystem zur Überwachung und Steuerung von Wareneingang, Lagerort und Warenausgang bereitgestellt, insbesondere von pflanzlichen Waren, in einem Warenlagerhaus. Das Warenlagersystem umfasst eine zentrale Steuervorrichtung, mehrere Lagereinheiten zur Lagerung von Ware und wenigstens eine Lagerdesinfektionsvorrichtung, wie sie in einer der obigen Ausführungsformen und Aspekt beschrieben wurde.

In einer bevorzugten Ausführungsform der vorliegenden Erfindung ist die Lagereinheiten zur Lagerung von pflanzlichen Produkten wie Zierpflanzen, Topfpflanzen oder Baum-, Boden- oder Knollenfrüchten, insbesondere von Schüttgut wie losen Knollen- oder Wurzelfrüchten geeignet.

In einer bevorzugten Ausführungsform der vorliegenden Erfindung übermitteln das Lesegerät und die Verarbeitungseinheit der Lagerdesinfektionsvorrichtung die Informationen der Markierungen der Lagereinheiten des Warenlagersystems und die Desinfektionsgrößen durchgeführter Desinfektionsvorgänge an die zentrale Steuervorrichtung, die die Informationen der Markierungen und die Desinfektionsgrößen durchgeführter Desinfektionsvorgänge mit logistischen Informationen des Warenlagersystems kombiniert.

In einer bevorzugten Ausführungsform der vorliegenden Erfindung werden die Kombination der Informationen der Markierungen, der Desinfektionsgrößen durchgeführter Desinfektionsvorgänge und der logistischen Informationen auf den Lagereinheiten vermerkt, in eine Onlinedatenbank hochgeladen und/oder an der Ware oder einem Behältnis, in dem die Ware verkauft oder versendet wird, durch einen Code vermerkt.

In einem weiteren Aspekt der vorliegenden Erfindung wird ein Desinfektions-Steuersystem bereitgestellt, das eine Lagerdesinfektionsvorrichtung umfasst, wie sie in den obigen Ausführungsformen und Aspekten beschrieben wurde. Das Desinfektions-Steuersystem umfasst weiterhin eine Verarbeitungseinheit, wobei die Verarbeitungseinheit den Desinfektionsvorgang mit einem Steuergerät überwacht und nachverfolgt, wobei das Steuergerät einen mit einem auf den Lagereinheiten befindlichen RFID Chip in Kontakt stehenden Transponder aufweist, der geeignet ist, den Chip auszulesen, eine Markierung in Auftrag zu geben, die Markierung zusammen mit der betreffenden Lagereinheit zu speichern und den Speicher bei Bedarf auszulesen, um den Desinfektionsvorgang zu dokumentieren und im Bedarfsfall eine bestimmte Lagereinheit zurückzuverfolgen.

In einem weiteren Aspekt der vorliegenden Erfindung wird ein Verfahren zur Desinfektion von Lagereinheiten bereitgestellt. Das Verfahren umfasst das Erfassen einer bestimmten Lagereinheit mittels eines Lesegeräts, das Ausführen eines Desinfektionsvorgangs mittels einer Desinfektionseinheit, das Überwachen und Steuern des Desinfektionsvorgangs mittels einer Verarbeitungseinheit und das Erfassen des Abschlusses des Desinfektionsvorgangs.

In einer bevorzugten Ausführungsform der vorliegenden Erfindung umfasst das Verfahren weiterhin das Ausführen eines Markierungsvorgangs mittels einer Markierungsvorrichtung.

In einer bevorzugten Ausführungsform der vorliegenden Erfindung umfasst das Verfahren weiterhin das Speichern eines Datensatzes, der Desinfektionsgrößen des Desinfektionsvorgangs umfasst, Übermitteln des Datensatzes an eine zentrale Vorrichtung und Verknüpfen des Datensatzes mit Daten in einem Lagerlogistiksystem.

In einem weiteren Aspekt der vorliegenden Erfindung wird ein Computerprogrammprodukt bereitgestellt, welches Anweisungen enthält, um einen Computer bzw. Steuergerät bzw. PDA zu veranlassen, ein Verfahren gemäß den obigen Ausführungsformen und/oder Aspekten auszuführen.

### Kurze Beschreibung der Zeichnungen

Fig. 1 zeigt eine schematische Darstellung einer Vorrichtung zur Desinfektion von Lagereinheiten gemäß der vorliegenden Erfindung.
Fig. 2 zeigt eine Ausführungsform einer Vorrichtung zur Desinfektion von Lagereinheiten als eine stationäre Vorrichtung, die mit einer zentralen Steuervorrichtung kommunizieren kann.
Fig. 3 zeigt eine Ausführungsform einer Vorrichtung zur Desinfektion von Lagereinheiten als eine mobile Vorrichtung, die mit einer zentralen Steuervorrichtung kommunizieren kann.
Fig. 4 ist ein Ablaufdiagramm, das ein Verfahren gemäß einer Ausführungsform der vorliegenden Erfindung zeigt.

### Ausführliche Beschreibung der Erfindung

Die folgenden Ausführungsformen beschreiben die zentralen und optionalen Aspekte der vorliegenden Erfindung beispielhaft. Wo immer möglich und zweckdienlich wurden gleiche oder ähnliche Bezugszeichen verwendet, um gleich oder ähnliche Elemente der Erfindung zu bezeichnen.

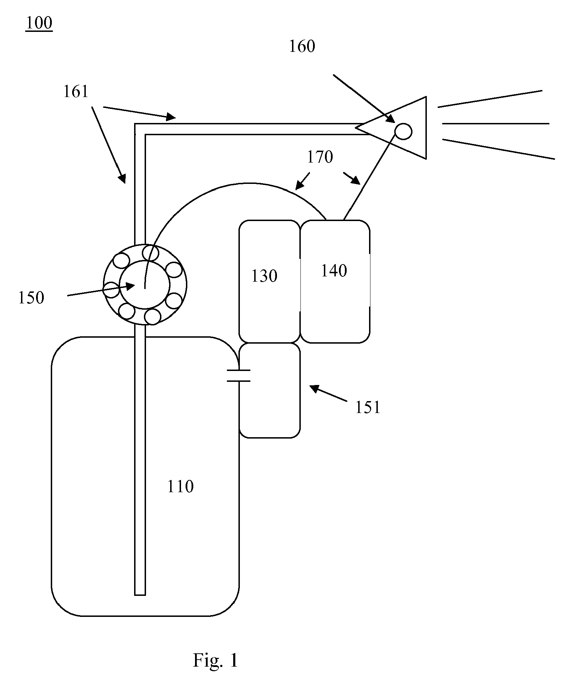

Fig. 1 zeigt eine schematische Darstellung einer Vorrichtung zur Desinfektion von Lagereinheiten gemäß der vorliegenden Erfindung. Mit Bezug auf Fig. 1 wird eine Vorrichtung 100 zur Desinfektion von Lagereinheiten (in Fig. 1 nicht gezeigt) offenbart, wobei die Lagereinheiten bevorzugt zur Aufnahme von pflanzlichen Waren bestimmt sind. Eine Längeneinheit ist dabei bevorzugt ein Regal, ein Behälter, eine Palette oder eine mobile Einheit. Die Vorrichtung 100 umfasst dabei eine Desinfektionseinheit, die angepasst ist, um die Lagereinheit zu desinfizieren. Die Desinfektionseinheit umfasst bevorzugt mindestens einen Tank 110, der geeignet ist, um ein Desinfektionsmittel vorzuhalten, wie etwa eine Desinfektionslösung oder ein pulverförmiges oder gasförmiges Desinfektionsmittel, und eine Austrittsvorrichtung 160, die geeignet ist, um das Desinfektionsmittel auf die Lagereinheit aufzubringen. Es können mehrere Tanks 110 zur Bereithaltung verschiedener Desinfektionsmittel bzw. unterschiedlicher Konzentrationen des gleichen Desinfektionsmittels vorgesehen sein. Die Austrittsvorrichtung 160 ist zum Beispiel eine Düse oder eine Aufschäumdüse. Die Austrittsvorrichtung 160 ist mit dem Tank 110 durch zumindest eine Leitung 161 verbunden, um das Desinfektionsmittel durch die Austrittsvorrichtung 160 auf die jeweils zu desinfizierende Lagereinheit aufzubringen. An dieser Stelle sei angemerkt, dass auch mehrere Lagereinheiten zu gleichen Zeit desinfiziert werden können.

Das Desinfektionsmittel wird durch zumindest eine geeignete Vorrichtung in Bewegung versetzt, die einen Druckunterschied zwischen dem Inneren des Tanks 110 und der Umgebung erzeugen kann. Zum Beispiel kann eine erste Pumpe 150 an der Leitung 161 vorgesehen sein oder eine zweite Pumpe 151 ist vorgesehen, die in dem Tank 110 einen Überdruck erzeugt. Natürlich können auch eine oder mehrere erste und/oder zweite Pumpen 150, 151 genutzt werden.

Außerdem umfasst die Vorrichtung 100 eine mit der Desinfektionseinheit verbundene Verarbeitungseinheit 140, die angepasst ist, um den Desinfektionsvorgang der Lagereinheit zu überwachen und zu steuern. Die Verarbeitungseinheit 140 ist dabei über Datenleitungen 170 mit einem oder mehreren Sensoren verbunden und empfängt Überwachungsdaten von diesen. Die Sensoren sind zum Beispiel an der ersten Pumpe 150, einer Leitung 161 oder der Austrittsvorrichtung 160 angebracht. Ein Sensor erfasst wenigstens eine relevante Größe (im Folgenden "Desinfektionsgrößen"), wie beispielsweise Temperatur des Desinfektionsmittels, Durchflussmenge des Desinfektionsmittels, Druck oder Austrittsgeschwindigkeit des Desinfektionsmittels, Desinfektionsmittelkonzentration, Einwirkdauer des Desinfektionsmittels (beispielsweise, wenn das Desinfektionsmittel durch die Vorrichtung 100 auch wieder entfernt wird, etwa durch einen Wasserstrahl oder Druckluft), etc.

In einer bevorzugten Ausführungsform ist die Verarbeitungseinheit 140 weiterhin angepasst, um die Sensordaten zu verarbeiten und die erste/ zweite Pumpe 150 und/oder 151, eine Desinfektionsmittelverdünnungsvorrichtung (nicht gezeigt) oder Eigenschaften der Austrittsvorrichtung 160 zu steuern, so dass der Desinfektionsvorgang vorbestimmten Normen oder einem eingespeicherten Programm entspricht.

Zusätzlich kann die Vorrichtung 100 eine geeignete Energieversorgung 130 umfassen, wie etwa eine Batterie, einen Kondensator oder einen Akkumulator, die die erste und/oder zweite Pumpe 150, 151 und/oder die Verarbeitungseinheit 140 mit Energie versorgt.

Die Vorrichtung 100 umfasst außerdem vorzugsweise ein Lesegerät (nicht gezeigt), das geeignet ist, um eine Lagereinheit anhand einer spezifischen Markierung zu identifizieren. Die Markierung der Lagereinheit kann dabei einen Strichcode, einen Zahlencode, einen QR-Code, einen Nahfeldkommunikationschip NFC-Chip, einen Radiofrequenzidentifikationschip RFID-Chip, andere passive Transponder und/oder Schreiben bzw. Ändern von Daten auf einem in die Lagereinheit integriertem Speichermedium umfassen. In einer Ausführungsform umfasst die Vorrichtung 100 weiterhin eine Markierungsvorrichtung, um eine oder mehrere der oben erwähnten Markierungen an eine Lagereinheit anzubringen. Dies kann auch durch Speichern von Daten (Anzeigern) auf einer Speichervorrichtung der Lagereinheit erfolgen.

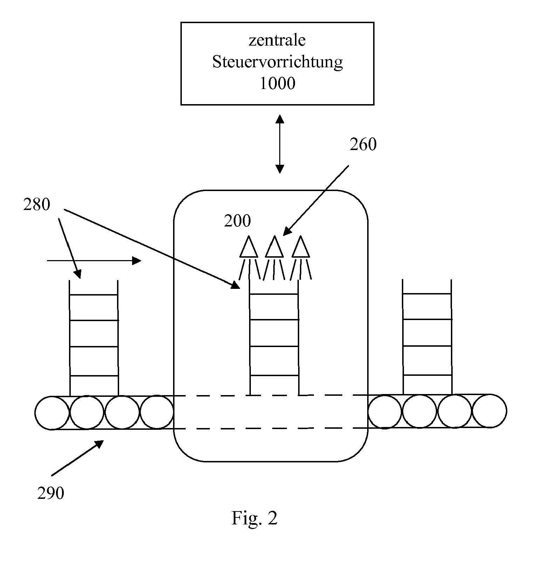

Fig. 2 zeigt eine Ausführungsform einer Vorrichtung zur Desinfektion von Lagereinheiten als eine stationäre Vorrichtung, die mit einer zentralen Steuervorrichtung kommunizieren kann. An dieser Stelle sei angemerkt, dass die Vorrichtung zur Desinfektion von Lagereinheiten gemäß der vorliegenden Erfindung bevorzugt in einem Lagerlogistiksystem (sog. "Warehouse Management System" WMS) verwendet werden kann. Die Einbindung in ein Lagerlogistiksystem erfolgt vorzugsweise über die Verarbeitungseinheit 140 der Vorrichtung 100, etwa über ein Drahtloskommunikationsnetzwerk, Bluetooth, oder andere geeignete Funkkommunikation.

Ein Lagerlogistiksystem ist für gewöhnlich eine umfangreiche Lösung für viele Belange eines zwischengelagerten Erzeugnisses. Solche Lagerlogistiksysteme überwachen, speichern und steuern üblicherweise die Anlieferung des Produkts (Art des Produkts, Zeitpunkt/Datum, Erzeugungsort, ggf. Zwischenlager mit dazugehörigen Daten, Erzeuger, Bestimmung etc.), die Einlagerung des Produkts (Ort bzw. in welcher Lagereinheit wird eingelagert, Lagerbedingungen wie Luftfeuchte, Temperatur, Luftzufuhr, Schutzatmosphären etc.) und den Warenausgang (Menge, Zeitpunkt/Datum, Bestimmungsort, Abnehmer, etc.). In modernen Systemen werden viele dieser Größen zugeschnitten auf Produkt und Nutzer automatisch erfasst und gesteuert. Die damit verbundenen Daten werden zentral gespeichert und mit dem Produkt verknüpft (z.B. über eine Kennziffer einer Transporteinheit des Produkts).

Um die oben beschriebene Vorrichtung 100 zur Desinfektion von Lagereinheiten der Fig. 1 möglichst effektiv in ein Lagerlogistiksystem einzubinden, wird in Fig. 2 eine Vorrichtung 200 zur Desinfektion von Lagereinheiten 280 als eine stationäre Vorrichtung gezeigt, die mit einer zentralen Steuervorrichtung 1000, z.B. eines Lagerlogistiksystems kommunizieren kann.

Die stationäre Vorrichtung 200 ist vorzugsweise ähnlich der oben beschriebenen Vorrichtung 100 der Fig. 1 aufgebaut. In Fig. 2 ist die Vorrichtung 200 zusätzlich mit mehren Austrittsvorrichtungen 260 ausgestattet. Außerdem ist ein Fördermittel an die Vorrichtung 200 angeschlossen, so dass Lagereinheiten 280 durch die Vorrichtung 200 hindurch bewegt werden und während der Durchfahrt desinfiziert werden können. Die Fördermittel und der Desinfektionsvorgang können dabei gekoppelt gesteuert werden, um eine möglichst schnelle und effiziente Desinfektion der Lagereinheiten 280 zu gewährleisten.

Die Lagereinheiten 280 werden vor dem Desinfektionsvorgang erfasst (etwa durch das Lesegerät) und die Desinfektion der Lagereinheit 280 nach Beendigung der Desinfektion an die zentrale Steuervorrichtung 1000 der Warenlagersystems übermittelt. Die entsprechenden Desinfektionsgrößen werden mit den Daten der Warenlagersystems kombiniert. Somit sind die Desinfektionsgrößen mit der Lagereinheit und mit in der Vergangenheit oder zukünftig in der desinfizierten Lagereinheit eingelagerten Produkten verknüpft.

Stellt sich nun heraus, dass ein ehemals eingelagertes Produkt durch Krankheitserreger/Chemikalien oder dergleichen kontaminiert ist/war, kann über die Daten des Warenlagersystems herausgefunden werden, welche Lagereinheit mit der Verunreinigung in Kontakt kam. Durch zusätzliche Untersuchungen kann somit festgestellt werden
a) wo die Kontamination ihren Ursprung hat/haben könnte (dieser muss zwischen der letzten Reinigung/Desinfektion der Lagereinheit und dem Ausgang der kontaminierten Ware liegen bzw. ein das Warenlagersystem gelangt sein);
b) welche weiteren Produkte kontaminiert sind/sein könnten und wo sich diese Produkte nun befinden
c) ob die Lagereinheiten ausreichend desinfiziert wurden (Intensität des Desinfektionsvorgangs, geeignetes Mittel, Temperatur, Dauer etc.)

Solche Untersuchungen bedürfen eines relativ geringen Aufwands und könnten automatisch durch ein geeignetes Computerprogrammprodukt ausgeführt werden.

Anstatt eine vorhandene Markierung einzulesen, kann die Lagereinheit 280 durch eine Markierungsvorrichtung der Vorrichtung 200 markiert werden. Auch diese Markierung kann entsprechend in das Warenlagersystem eingepflegt werden.

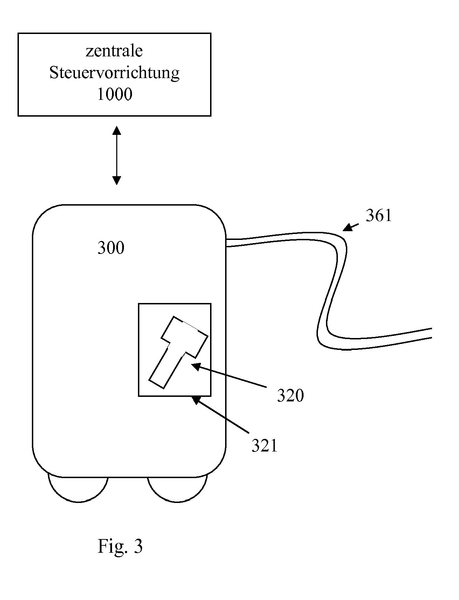

Fig. 3 zeigt eine Ausführungsform einer Vorrichtung 300 zur Desinfektion von Lagereinheiten als eine mobile Vorrichtung, die mit einer zentralen Steuervorrichtung 1000 kommunizieren kann.

Die Vorrichtung 300 entspricht in Funktion und Zusammensetzung im Wesentlichen den oben beschriebenen Vorrichtungen 100 und 200. Anstatt einer stationären Vorrichtung 200 ist jedoch eine mobile Vorrichtung 300 gezeigt, die über geeignete Fortbewegungsmittel verfügt (z.B. Räder, Rollen oder Walzen). Außerdem ist in Fig. 3 ein Lesegerät 320 gezeigt, das in einer entsprechenden Aussparung in einem Gehäuse der Vorrichtung 300 untergebracht ist. Des Weiteren ist zur besseren Handhabung der Vorrichtung 300 ein Schlauch 361 als eine Austrittsvorrichtung vorgesehen, um dem Benutzer die Bedienung während des Desinfektionsvorgangs zu erleichtern. Obwohl die mobile Vorrichtung vorzugsweise für den Betrieb durch Personal des Warenlagersystems geeignet ist, spricht nichts dagegen, die Vorrichtung 300 derart auszustatten, dass sie zu desinfizierende Lagereinheiten selbstständig findet, erfasst und desinfiziert. Die dafür nötige Steuerung und Sensoren sind im Stand der Technik bekannt (z.B. automatische Rasenmäher, Staubsauger oder Wachroboter).

In einer bevorzugten Ausführungsform der vorliegenden Erfindung ist das Lesegerät 320 ein optisches Lesegerät, das angepasst ist, um Strichcodes und/oder QR-codes zu lesen und zu entschlüsseln. Die resultierenden Daten können an die Verarbeitungseinheit 140 und/oder die zentralen Steuervorrichtung 1000 übermittelt werden.

In einer bevorzugten Ausführungsform der vorliegenden Erfindung umfasst die Markierungsvorrichtung eine Etikettiervorrichtung, eine Nahfeldkommunikationsvorrichtung, einen aktiven Transponder und/oder eine Stempelvorrichtung. Die Markierungsvorrichtung kann auch Daten auf einen Speicher der Lagereinheit schreiben bzw. diese auslesen, um die Lagereinheit daraufhin mit der zentralen Steuereinheit 1000 als markiert mitzuteilen.

In einer bevorzugten Ausführungsform der vorliegenden Erfindung ist die Desinfektionseinheit angepasst, um gemäß einer Identifikation einer Lagereinheit 280 einen Desinfektionsschaum auf die Lagereinheiten 280 zu verteilen. Desinfektionsschaum kann selbst abfließen, wobei jedoch die Eigenschaften des Schaums genau eingestellt werden müssen. Alternativ kann der Desinfektionsschaum auch über eine Wasserdusche oder Druckluft von der Lagereinheit entfernt werden, um den Desinfektionsvorgang zu beenden.

In einer bevorzugten Ausführungsform der vorliegenden Erfindung umfasst die Verarbeitungseinheit 140 eine Speicherkartenaufnahme, einen Universalschnittstellen-BUS-Anschluss/USB-Anschluss, eine Drahtloskommunikationsvorrichtung oder eine serielle Computerschnittstelle.

In einer bevorzugten Ausführungsform der vorliegenden Erfindung umfasst die Lagerdesinfektionsvorrichtung 100, 200, 300 weiterhin eine Anzeigevorrichtung, die angepasst ist, um für den Desinfektionsvorgang relevante Größen anzuzeigen und/oder grafisch in einem Diagramm darzustellen.

In einer bevorzugten Ausführungsform der vorliegenden Erfindung ist die Desinfektionseinheit der Lagerdesinfektionsvorrichtung 100, 200, 300 weiterhin angepasst, um gemäß einer Identifikation bzw. der Markierung der Lagereinheit ein erstes Desinfektionsmittel und/oder ein zweites Desinfektionsmittel auf die Lagereinheiten zu verteilen. Das erste und das zweite Desinfektionsmittel werden in zwei unabhängigen Tanks bereitgehalten. Die Steuerung, welcher der beiden Tanks als Quelle für ein Desinfektionsmittel eines Desinfektionsvorgangs dienen soll kann manuell (z.B. über einen Schalter oder Auswahl in einer Softwaredarstellung auf einem berührungsempfindlichen Bildschirm) übernommen werden. Vorzugsweise wird die Steuerung jedoch von der Verarbeitungseinheit 140 der Lagerdesinfektionsvorrichtung 100, 200, 300 übernommen. Die Auswahl wird anhand der Informationen aus der ausgelesenen Markierung auf der Lagereinheit getroffen. Zum Beispiel wird eine höhere Desinfektionsmittelkonzentration gewählt, falls der letzte Desinfektionsvorgang bereits relativ lange zurückliegt oder ein gewisse Gefährdung (z.B. Kontamination) in Verbindung mit der jeweiligen Lagereinheit festgestellt wurde.

In einer bevorzugten Ausführungsform der vorliegenden Erfindung umfasst die Verarbeitungseinheit 140 weiterhin eine Steuereinheit, die angepasst ist, um die Lagerdesinfektionsvorrichtung 100, 200, 300 durch eine angebundene Steuerungszentrale des Warenlagersystems oder ein geeignetes Computerprogramm zu steuern.

In einem weiteren Aspekt der vorliegenden Erfindung wird ein Warenlagersystem zur Überwachung und Steuerung von Wareneingang, Lagerort und Warenausgang bereitgestellt, insbesondere von pflanzlichen Waren, in einem Warenlagerhaus. Das Warenlagersystem umfasst eine zentrale Steuervorrichtung, mehrere Lagereinheiten zur Lagerung von Ware und wenigstens eine Lagerdesinfektionsvorrichtung, wie sie in einer der obigen Ausführungsformen und Aspekten beschrieben wurde. Ziel ist es dabei, die Desinfektionsgrößen mit den Daten des Warenlagersystems zu verknüpfen und somit die Identifikation von Krankheitserregern rückwirkend auf das Warenlager zu übertragen, um dann entsprechende Maßnahmen zu ergreifen. Solche Maßnahmen sind für gewöhnlich die Desinfektion aller Lagereinheiten, die mit dem kontaminierten Produkt in Kontakt gekommen sind und die Sicherung bzw. Vernichtung von Produkten, die durch Kontakt mit einer potentiell verunreinigten Lagereinheiten oder einem kontaminierten Produkt selbst kontaminiert sein könnten (z.B. Starten einer Rückrufaktion).

Wird eine Kontamination bzw. Gefährdung festgestellt, ist die Lagerdesinfektionsvorrichtung 100, 200, 300 der vorliegenden Erfindung in dem Warenlagersystem dazu in der Lage, den Benutzer der Lagerdesinfektionsvorrichtung 100, 200, 300 auf die Gefährdung hinzuweisen, so dass dieser entsprechende Maßnahmen ergreifen kann ohne sich detailliert mit der Gefährdung oder dem Warenlagersystem auseinander setzen zu müssen. Außerdem kann die Lagerdesinfektionsvorrichtung 100, 200, 300 als Reaktion auf die Gefährdung automatisch Desinfektionsmittel(-Konzentration) und Desinfektionsgrößen des Desinfektionsvorgangs bestimmen, um so die Ausbreitung von Krankheitserregern bzw. die Gefährdung von Verbrauchern zu verhindern.

In einer bevorzugten Ausführungsform der vorliegenden Erfindung ist die Lagereinheiten zur Lagerung von tierischen Produkten, wie etwa Schlachtzwischenprodukte, Schlachtendprodukte, Eier Schalentiere, Muscheln, Fisch, Fischerzeugnisse und Meeresfrüchte, oder von pflanzlichen Produkten, wie Zierpflanzen, Topfpflanzen oder Baum- , Boden- oder Knollenfrüchten, insbesondere von Schüttgut wie losen Knollen- oder Wurzelfrüchten geeignet.

In einer bevorzugten Ausführungsform der vorliegenden Erfindung übermitteln das Lesegerät 320 und die Verarbeitungseinheit 140 der Lagerdesinfektionsvorrichtung 100, 200, 300 die Informationen der Markierungen der Lagereinheiten des Warenlagersystems und die Desinfektionsgrößen durchgeführter Desinfektionsvorgänge an die zentrale Steuervorrichtung 1000, die die Informationen der Markierungen und die Desinfektionsgrößen durchgeführter Desinfektionsvorgänge mit logistischen Informationen des Warenlagersystems kombiniert.

In einer bevorzugten Ausführungsform der vorliegenden Erfindung werden die Kombination der Informationen der Markierungen, der Desinfektionsgrößen durchgeführter Desinfektionsvorgänge und der logistischen Informationen auf den Lagereinheiten vermerkt, in eine Onlinedatenbank hochgeladen und/oder an der entstehenden Ware oder einem Behältnis, in dem die Ware verkauft oder versendet wird, durch einen Code oder dergleichen vermerkt. Diese Maßnahme dient der erleichterten Rückverfolgung, falls sich herausstellen sollte, dass ein Produkt bzw. Ware durch Krankheitserreger/Chemikalien oder ähnliches kontaminiert ist.

In einem weiteren Aspekt der vorliegenden Erfindung wird ein Desinfektions-Steuersystem bereitgestellt, das für eine Lagerdesinfektionsvorrichtung geeignet ist, wie sie in den obigen Ausführungsformen und Aspekten beschrieben wurde. Das Desinfektions-Steuersystem umfasst außerdem eine Verarbeitungseinheit, wobei die Verarbeitungseinheit einen Desinfektionsvorgang mit einem Steuergerät überwacht und nachverfolgt, wobei das Steuergerät einen mit einem auf den Lagereinheiten befindlichen RFID Chip in Kontakt stehenden Transponder aufweist, der geeignet ist, den Chip auszulesen, eine Markierung in Auftrag zu geben, die Markierung zusammen mit der betreffenden Lagereinheit zu speichern und den Speicher bei Bedarf auszulesen, um den Desinfektionsvorgang zu dokumentieren und im Bedarfsfall eine bestimmte Lagereinheit zurückzuverfolgen.

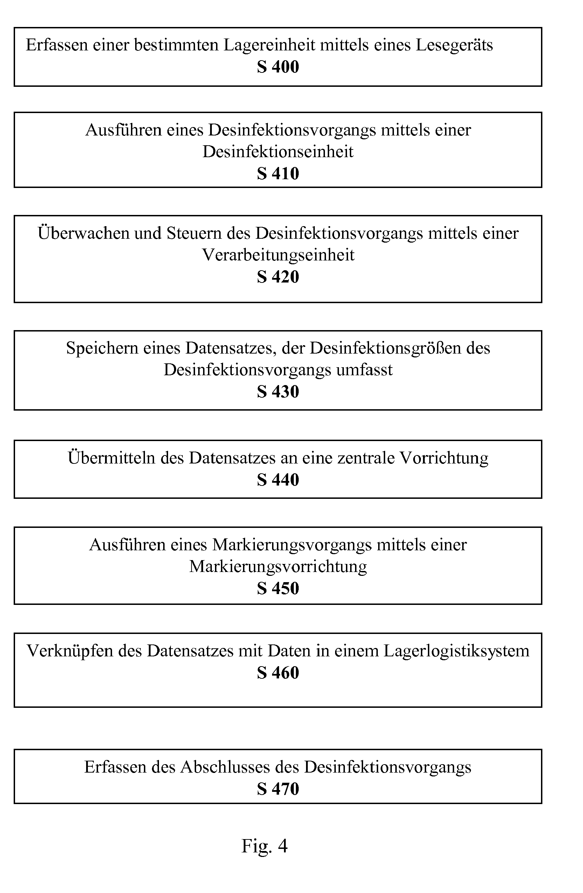

Fig. 4 ist ein Ablaufdiagramm, das ein Verfahren zur Desinfektion von Lagereinheiten bereitstellt. Das Verfahren umfasst das Erfassen S 400 einer bestimmten Lagereinheit mittels eines Lesegeräts. Es sei angemerkt, dass das Erfassen der Lagereinheit zu jedem Zeitpunkt vor, während, und nach einem Desinfektionsvorgang des Verfahrens ausgeführt werden kann. Vorzugsweise erfolgt das Erfassen jedoch vor dem Start des Desinfizierens. Vorzugsweise erfolgt das Erfassen der Lagereinheit durch Erfassen eines aktiven oder passiven Transponders, der an der Lagereinheit angebracht ist. Weiterhin wird der Transponder ausgelesen, um bestimmte Daten zu erhalten (beispielsweise eines früheren Desinfektionsvorgangs, der zuvor in der Lagereinheit gelagerten Produkte, eine Gefährdungsstufe oder dergleichen), mit deren Hilfe eine oder mehrere Variablen (siehe vorhergehende Ausführungsformen) des anschließenden Vorgangs optimiert werden.

Das Verfahren umfasst weiterhin das Ausführen S 410 eines Desinfektionsvorgangs mittels einer Desinfektionseinheit. Der Desinfektionsvorgang kann wie in den obigen Ausführungsformen beschrieben ausgeführt werden, beispielsweise durch Aufbringen eines Desinfektionsschaums auf die Lagereinheit.

Das Verfahren umfasst weiterhin das Überwachen und/oder Steuern S 420 des Desinfektionsvorgangs mittels einer Verarbeitungseinheit und das Erfassen S 470 des Abschlusses des Desinfektionsvorgangs. Für die Steuerung des Desinfektionsvorgangs können Daten aus der Überwachung des Desinfektionsvorgangs (siehe obige Ausführungsformen) verwendet werden. Zusätzlich oder alternativ dazu können auch Daten aus einem Transponder, der an der Lagereinheit angebracht ist und Daten (beispielsweise eines früheren Desinfektionsvorgangs, der zuvor in der Lagereinheit gelagerten Produkte, eine Gefährdungsstufe oder dergleichen) bereitstellen kann, zur Einstellung des Desinfektionsvorgangs verwendet werden.

In einer bevorzugten Ausführungsform der vorliegenden Erfindung umfasst das Verfahren weiterhin das Ausführen S 450 eines Markierungsvorgangs mittels einer Markierungsvorrichtung. Der Markierungsvorgang kann einen reinen Marker oder Daten des Desinfektionsvorgangs umfassen.

Insbesondere, in einer bevorzugten Ausführungsform der vorliegenden Erfindung, umfasst das Verfahren weiterhin das Speichern S 430 eines Datensatzes, der Desinfektionsgrößen des Desinfektionsvorgangs umfasst. Diese Desinfektionsgrößen können Temperatur des Desinfektionsmittels, Durchflussmenge des Desinfektionsmittels, Druck oder Austrittsgeschwindigkeit des Desinfektionsmittels, Desinfektionsmittelkonzentration, Einwirkdauer des Desinfektionsmittels umfassen.

In einer bevorzugten Ausführungsform der vorliegenden Erfindung umfasst das Verfahren weiterhin das Übermitteln S 440 des Datensatzes an eine zentrale Vorrichtung 1000 und Verknüpfen S 460 des Datensatzes mit Daten in einem Lagerlogistiksystem.

In einem weiteren Aspekt der vorliegenden Erfindung wird ein Computerprogrammprodukt bereitgestellt, welches Anweisungen enthält, um einen Computer bzw. Steuergerät bzw. PDA zu veranlassen, ein Verfahren gemäß den obigen Ausführungsformen und/oder Aspekten auszuführen.

## Patentansprüche

1. Vorrichtung zur Desinfektion von Lagereinheiten, wobei die Lagereinheiten zur Aufnahme von pflanzlichen Waren bestimmt sind, umfassend:
eine Desinfektionseinheit, die angepasst ist, um eine Lagereinheit zu desinfizieren;
eine mit der Desinfektionseinheit verbundene Verarbeitungseinheit, die angepasst ist, um den Desinfektionsvorgang der Lagereinheit zu überwachen und zu steuern; und
ein Lesegerät, das angepasst ist, um die Lagereinheit des Warenlagers anhand einer individuellen Markierung zu identifizieren.

2. Lagerdesinfektionsvorrichtung gemäß Anspruch 1, weiterhin umfassend:
eine Markierungsvorrichtung, die angepasst ist, um die Lagereinheit als desinfiziert zu markieren, wobei die Markierung der Lagereinheit einen Strichcode, einen Zahlencode, einen QR-Code, einen Nahfeldkommunikationschip NFC-Chip, einen Radiofrequenzidentifikationschip RFID-Chip, andere passive Transponder und/oder Datenänderungen auf einem in die Lagereinheit integriertem Speichermedium umfasst, wobei die Markierungsvorrichtung eine Etikettiervorrichtung, eine Nahfeldkommunikationsvorrichtung, einen aktiven Transponder und/oder eine Stempelvorrichtung umfasst, wobei die Verarbeitungseinheit eine Speicherkartenaufnahme, einen Universalschnittstellen-BUS-Anschluss/USB-Anschluss, eine Drahtloskommunikationsvorrichtung oder eine serielle Computerschnittstelle umfasst.

3. Lagerdesinfektionsvorrichtung gemäß einem der vorstehenden Ansprüche, wobei die Desinfektionseinheit angepasst ist, um gemäß einer Identifikation einer Lagereinheit einen Desinfektionsschaum auf die Lagereinheiten zu verteilen.

4. Lagerdesinfektionsvorrichtung gemäß einem der vorstehenden Ansprüche, wobei die Desinfektionseinheit angepasst ist, um gemäß einer Identifikation einer Lagereinheit ein erstes Desinfektionsmittel und/oder ein zweites Desinfektionsmittel auf die Lagereinheiten zu verteilen.

5. Lagerdesinfektionsvorrichtung gemäß einem der vorstehenden Ansprüche, wobei die Verarbeitungseinheit angepasst ist, um über geeignete Sensoren wenigstens eine der Desinfektionsgrößen:
Druck des Desinfektionsmittels, Temperatur des Desinfektionsmittels, Einwirkzeit des Desinfektionsmittels, Desinfektionsmittelkonzentration in einer Desinfektionslösung und Volumenstrom pro Zeit des Desinfektionsmittels zu überwachen und/oder zu steuern, wobei die Verarbeitungseinheit angepasst ist, um die überwachten und/oder gesteuerten Werte zu speichern und an eine zentrale Vorrichtung zu übermitteln.

6. Lagerdesinfektionsvorrichtung gemäß Anspruch 5, wobei wenigstens eine der Desinfektionsgrößen zusammen mit Ort und Zeit, sowie bevorzugt Art der Desinfektion auf der Lagereinheit vermerkt wird.

7. Lagerdesinfektionsvorrichtung gemäß einem der vorstehenden Ansprüche, weiterhin umfassend:
eine Anzeigevorrichtung, die angepasst ist, um für den Desinfektionsvorgang relevante Größen anzuzeigen und/oder grafisch in einem Diagramm darzustellen.

8. Lagerdesinfektionsvorrichtung gemäß einem der vorstehenden Ansprüche, wobei die Verarbeitungseinheit weiterhin eine Steuereinheit umfasst, die angepasst ist, um die Lagerdesinfektionsvorrichtung durch eine angebundene Steuerungszentrale oder ein geeignetes Computerprogramm zu steuern.

9. Warenlagersystem zur Überwachung und Steuerung von Wareneingang, Lagerort und Warenausgang, insbesondere von pflanzlichen Waren, in einem Warenlagerhaus, umfassend:
eine zentrale Steuervorrichtung;
mehrere Lagereinheiten zur Lagerung von Ware; und
wenigstens eine Lagerdesinfektionsvorrichtung gemäß einem der vorstehenden Ansprüche.

10. Warenlagersystem gemäß Anspruch 9, wobei die Lagereinheiten zur Lagerung von tierischen Produkten, wie etwa Schlachtzwischenprodukte, Schlachtendprodukte, Eier, Schalentiere, Muscheln, Fisch, Fischerzeugnisse und Meeresfrüchte oder pflanzlichen Produkten wie Zierpflanzen, Topfpflanzen oder Baum-, Boden- oder Knollenfrüchten, insbesondere von Schüttgut wie losen Knollen- oder Wurzelfrüchten geeignet sind.

11. Warenlagersystem gemäß Anspruch 9 oder 10, wobei das Lesegerät und die Verarbeitungseinheit der Lagerdesinfektionsvorrichtung die Informationen der Markierungen der Lagereinheiten des Warenlagersystems und die Desinfektionsgrößen durchgeführter Desinfektionsvorgänge an die zentrale Steuervorrichtung übermitteln, die die Informationen der Markierungen und die Desinfektionsgrößen durchgeführter Desinfektionsvorgänge mit logistischen Informationen des Warenlagersystems kombiniert.

12. Warenlagersystem gemäß Anspruch 11, wobei die Kombination der Informationen der Markierungen, der Desinfektionsgrößen durchgeführter Desinfektionsvorgänge und der logistischen Informationen auf den Lagereinheiten vermerkt werden, in eine Onlinedatenbank hochgeladen werden und/oder an der Ware oder einem Behältnis, in dem die Ware verkauft oder versendet wird, durch einen Code vermerkt werden.

13. Desinfektions-Steuersystem, für eine Lagerdesinfektionsvorrichtung gemäß einem der Ansprüche 1-8, wobei die Verarbeitungseinheit einen Desinfektionsvorgang mit einem Steuergerät überwacht und nachverfolgt, wobei das Steuergerät einen mit einem auf den Lagereinheiten befindlichen RFID Chip in Kontakt stehenden Transponder aufweist, der geeignet ist, den Chip auszulesen, eine Markierung in Auftrag zu geben, die Markierung zusammen mit der betreffenden Lagereinheit zu speichern und den Speicher bei Bedarf auszulesen, um den Desinfektionsvorgang zu dokumentieren und im Bedarfsfall eine bestimmte Lagereinheit zurückzuverfolgen.

14. Verfahren zur Desinfektion von Lagereinheiten, umfassend:
Erfassen einer bestimmten Lagereinheit mittels eines Lesegeräts;
Ausführen eines Desinfektionsvorgangs mittels einer Desinfektionseinheit;
Überwachen und Steuern des Desinfektionsvorgangs mittels einer Verarbeitungseinheit; und
Erfassen des Abschlusses des Desinfektionsvorgangs.

15. Verfahren gemäß Anspruch 14, weiterhin umfassend
Ausführen eines Markierungsvorgangs mittels einer Markierungsvorrichtung;
Speichern eines Datensatzes, der Desinfektionsgrößen des Desinfektionsvorgangs umfasst;
Übermitteln des Datensatzes an eine zentrale Vorrichtung; und
Verknüpfen des Datensatzes mit Daten in einem Lagerlogistiksystem.

16. Computerprogrammprodukt, enthaltend Anweisungen, um einen Computer bzw. Steuergerät bzw. PDA zu veranlassen, ein Verfahren gemäß einem der Ansprüche 14-15 auszuführen.

## Geänderte Patentansprüche

### Geänderte Patentansprüche gemäss Regel 137(2) EPÜ.

1. Verfahren zur Desinfektion von Lagereinheiten (280) für die Lagerung pflanzlicher Waren, umfassend:
Erfassen einer bestimmten Lagereinheit (280) mittels eines Lesegeräts;
Ausführen eines Desinfektionsvorgangs mittels einer Desinfektionseinheit durch Verteilen eines ersten Desinfektionsmittels und/oder eines zweiten Desinfektionsmittels auf der Lagereinheiten (280) gemäß einer Identifikation der Lagereinheit (280);
Überwachen und Steuern des Desinfektionsvorgangs mittels einer Verarbeitungseinheit (140); und
Erfassen des Abschlusses des Desinfektionsvorgangs.

2. Verfahren gemäß Anspruch 1, weiterhin umfassend
Ausführen eines Markierungsvorgangs mittels einer Markierungsvorrichtung;
Speichern eines Datensatzes, der Desinfektionsgrößen des Desinfektionsvorgangs umfasst;
Übermitteln des Datensatzes an eine zentrale Vorrichtung; und
Verknüpfen des Datensatzes mit Daten in einem Lagerlogistiksystem.

3. Vorrichtung (100) zur Durchführung des Verfahrens gemäß Anspruch 1 oder 2, zur Desinfektion von Lagereinheiten (280), wobei die Lagereinheiten (280) zur Aufnahme von pflanzlichen Waren bestimmt sind, umfassend:
eine Desinfektionseinheit, die angepasst ist, um eine Lagereinheit (280) zu desinfizieren, wobei die Desinfektionseinheit angepasst ist, um gemäß einer Identifikation einer Lagereinheit (280) ein erstes Desinfektionsmittel und/oder ein zweites Desinfektionsmittel auf die Lagereinheiten (280) zu verteilen;
eine mit der Desinfektionseinheit verbundene Verarbeitungseinheit (140), die angepasst ist, um den Desinfektionsvorgang der Lagereinheit (280) zu überwachen und zu steuern; und
ein Lesegerät (320), das angepasst ist, um die Lagereinheit (280) des Warenlagers anhand einer individuellen Markierung zu identifizieren.

4. Lagerdesinfektionsvorrichtung (100) gemäß Anspruch 3, weiterhin umfassend:
eine Markierungsvorrichtung, die angepasst ist, um die Lagereinheit (280) als desinfiziert zu markieren, wobei die Markierung der Lagereinheit (280) einen Strichcode, einen Zahlencode, einen QR-Code, einen Nahfeldkommunikationschip NFC-Chip, einen Radiofrequenzidentifikationschip RFID-Chip, andere passive Transponder und/oder Datenänderungen auf einem in die Lagereinheit (280) integriertem Speichermedium umfasst, wobei die Markierungsvorrichtung eine Etikettiervorrichtung, eine Nahfeldkommunikationsvorrichtung, einen aktiven Transponder und/oder eine Stempelvorrichtung umfasst, wobei die Verarbeitungseinheit (140) eine Speicherkartenaufnahme, einen Universalschnittstellen-BUS-Anschluss/USB-Anschluss, eine Drahtloskommunikationsvorrichtung oder eine serielle Computerschnittstelle umfasst.

5. Lagerdesinfektionsvorrichtung gemäß einem der Ansprüche 3 oder 4, wobei die Desinfektionseinheit angepasst ist, um gemäß der Identifikation einer Lagereinheit einen Desinfektionsschaum auf die Lagereinheiten zu verteilen.

6. Lagerdesinfektionsvorrichtung (100) gemäß einem der Ansprüche 3-5, wobei die Verarbeitungseinheit (140) angepasst ist, um über geeignete Sensoren wenigstens eine der Desinfektionsgrößen:
Druck des Desinfektionsmittels, Temperatur des Desinfektionsmittels, Einwirkzeit des Desinfektionsmittels, Desinfektionsmittelkonzentration in einer Desinfektionslösung und
Volumenstrom pro Zeit des Desinfektionsmittels zu überwachen und/oder zu steuern, wobei die Verarbeitungseinheit (140) angepasst ist, um die überwachten und/oder gesteuerten Werte zu speichern und an eine zentrale Vorrichtung zu übermitteln.

7. Lagerdesinfektionsvorrichtung (100) gemäß Anspruch 6, wobei wenigstens eine der Desinfektionsgrößen zusammen mit Ort und Zeit, sowie bevorzugt Art der Desinfektion auf der Lagereinheit (280) vermerkt wird.

8. Lagerdesinfektionsvorrichtung (100) gemäß einem der Ansprüche 3-7, weiterhin umfassend:
eine Anzeigevorrichtung, die angepasst ist, um für den Desinfektionsvorgang relevante Größen anzuzeigen und/oder grafisch in einem Diagramm darzustellen.

9. Lagerdesinfektionsvorrichtung (100) gemäß einem der Ansprüche 3-8, wobei die Verarbeitungseinheit (140) weiterhin eine Steuereinheit umfasst, die angepasst ist, um die Lagerdesinfektionsvorrichtung (100) durch eine angebundene Steuerungszentrale oder ein geeignetes Computerprogramm zu steuern.

10. Warenlagersystem zur Überwachung und Steuerung von Wareneingang, Lagerort und Warenausgang, insbesondere von pflanzlichen Waren, in einem Warenlagerhaus, umfassend:
eine zentrale Steuervorrichtung;
mehrere Lagereinheiten (280) zur Lagerung von Ware; und
wenigstens eine Lagerdesinfektionsvorrichtung (100) gemäß einem der Ansprüche 3-9.

11. Warenlagersystem gemäß Anspruch 10, wobei die Lagereinheiten (280) zur Lagerung von tierischen Produkten, wie etwa Schlachtzwischenprodukte, Schlachtendprodukte, Eier, Schalentiere, Muscheln, Fisch, Fischerzeugnisse und Meeresfrüchte oder pflanzlichen Produkten wie Zierpflanzen, Topfpflanzen oder Baum-, Boden- oder Knollenfrüchten, insbesondere von Schüttgut wie losen Knollen- oder Wurzelfrüchten geeignet sind.

12. Warenlagersystem gemäß Anspruch 10 oder 11, wobei das Lesegerät (320) und die Verarbeitungseinheit (140) der Lagerdesinfektionsvorrichtung (100) die Informationen der Markierungen der Lagereinheiten (280) des Warenlagersystems und die Desinfektionsgrößen durchgeführter Desinfektionsvorgänge an die zentrale Steuervorrichtung übermitteln, die die Informationen der Markierungen und die Desinfektionsgrößen durchgeführter Desinfektionsvorgänge mit logistischen Informationen des Warenlagersystems kombiniert.

13. Warenlagersystem gemäß Anspruch 12, wobei die Kombination der Informationen der Markierungen, der Desinfektionsgrößen durchgeführter Desinfektionsvorgänge und der logistischen Informationen auf den Lagereinheiten (280) vermerkt werden, in eine Onlinedatenhank hochgeladen werden und/oder an der Ware oder einem Behältnis, in dem die Ware verkauft oder versendet wind, durch einen Code vermerkt werden.

14. Desinfektions-Steuersystem, für eine Lagerdesinfektionsvorrichtung (100) gemäß einem der Ansprüche 3-9, wobei die Verarbeitungseinheit (140) einen Desinfektionsvorgang mit einem Steuergerät überwacht und nachverfolgt, wobei das Steuergerät einen mit einem auf den Lagereinheiten (280) befindlichen RFID Chip in Kontakt stehenden Transponder aufweist, der geeignet ist, den Chip auszulesen, eine Markierung in Auftrag zu geben, die Markierung zusammen mit der betreffenden Lagereinheit (280) zu speichern und den Speicher bei Bedarf auszulesen, um den Desinfektionsvorgang zu dokumentieren und im Bedarfsfall eine bestimmte Lagereinheit (280) zurückzuverfolgen.

15. Computerprogrammprodukt, enthaltend Anweisungen, um einen Computer bzw. Steuergerät bzw. PDA zu veranlassen, ein Verfahren gemäß einem der Ansprüche 1-2 auszuführen.
